# EUROPEAN PATENT SPECIFICATION

(11) **EP 2 678 398 B1**
(45) Date of publication and mention of the grant of the patent: **01.02.2017**
(21) Application number: 12710566.6
(22) Date of filing: 24.02.2012
(51) Int. Cl.: C09J 123/08

(54) **HOT MELT ADHESIVE**
SCHMELZHAFTKLEBER
ADHÉSIF THERMOFUSIBLE

(30) Priority: 25.02.2011 JP 2011039806
(43) Date of publication of application: 01.01.2014
(73) Proprietor: Henkel AG & Co. KGaA, 40589 Düsseldorf (DE)
(72) Inventor: TAKAMORI, Ai, Minoo-shi Osaka 562-8586 (JP)
(86) International application number: PCT/JP2012/055296
(87) International publication number: WO 2012/115279

(56) References cited:
- WO-A1-97/33921
- WO-A2-2006/082478

## Description

### Technical Field

The present invention relates to a hot melt adhesive. Furthermore, the present invention relates to a paper product obtained using the hot melt adhesive.

### Background Art

A hot melt adhesive is a solvent-free adhesive and has features enabling of instant bonding and high-speed bonding since adhesion of the adhesive is exhibited after the adhesive is heated and melted, coated to an adherend and then solidified by being cooled. For example, the hot melt adhesive is now widely used in paper processing, woodworking, sanitary material and electronic fields.

There have been used commonly, as a base polymer of the hot melt adhesive, ethylene-based copolymers such as an ethylene-vinyl acetate copolymer (hereinafter also referred to as "EVA") and an ethylene-ethyl acrylate copolymer (hereinafter also referred to as "EEA"); olefin-based resins such as polyethylene, polypropylene and amorphous polyalphaolefin (hereinafter also referred to as "APAO"); synthetic rubbers such as a styrene-based block copolymer (for example, a styrene-isoprene-styrene-based block copolymer (hereinafter also referred to as "SIS"), a styrenebutadiene-styrene-based block copolymer (hereinafter also referred to as "SBS") and a hydrogenated product thereof); polyurethanes; and the like, according to the intended use.

Among these hot melt adhesives, a hot melt adhesive containing the ethylene-based copolymer as a base polymer is frequently used in the paper processing field such as bookbinding and packing, and the woodworking field.

In case of applying the hot melt adhesive, a special coating applicator called a hot melt applicator is frequently used. The hot melt applicator includes a nozzle which is a dispense port, and the hot melt adhesive is heated to about 120 to 190°C, dispensed from a nozzle tip and applied to an adherend.

In case of applying the hot melt adhesive, a string-shaped substance of the hot melt adhesive may be sometimes generated between the nozzle tip and the adherend. This string-shaped substance is due to stringing property of the hot melt adhesive, and soils the nozzle and the adherend. Therefore, it is an important responsibility for adhesive manufacturers to develop a hot melt adhesive which is less likely to cause stringing.

Patent Documents 1 and 2 disclose hot melt adhesives containing an ethylene-based copolymer as a base polymer.

Patent Document 1 discloses mixing of a hot melt adhesive containing a copolymer of ethylene/(meth)acrylic acid ester as a base resin with polyethylene obtained by a moderate/low pressure method (claim 1 of Patent Document 1). Patent Document 2 discloses a hot melt adhesive containing a copolymer of ethylene/C3-C20 α-olefin as a base polymer which is used in packing, bookbinding and woodworking (see claim 1 and [0013] of Patent Document 2). Both documents disclose reduction of stringing of the hot melt adhesives.

However, there are increasing requirements for the reduction of stringing of the hot melt adhesive every year. In particular, users, who handle cardboards such as corrugated cardboard and carton, make severe requirements on stringing. Patent Documents 1 and 2 disclose the hot melt adhesives having low stringing property, however, they do not sufficiently, preferably completely, meet high performance required by users.

Furthermore, not only reduction of stringing property, but also heat resistance, thermal stability, and adhesion in a wide temperature range are required to the hot melt adhesive.

Thus, it has been desired to develop a hot melt adhesive which is excellent in all of stringing property, heat resistance, thermal stability and adhesion in a wide temperature range.

- Patent Document 1:: JP 2007-314716 A
- Patent Document 2:: JP 2008-527067 A

### Disclosure of the Invention

### Problems to be Solved by the Invention

The present invention has been made so as to achieve the below-mentioned object, and the object of the present invention is to provide a hot melt adhesive which is less likely to cause stringing and is excellent in heat resistance and thermal stability, and also has excellent adhesive strength in a wide temperature range. Another object thereof is to provide a paper product produced by using the hot melt adhesive.

### Means for Solving the Problems

The present inventors have intensively studied and found that the above-mentioned object can be achieved by mixing a specific ethylene-based copolymer in a certain constant proportion in case of producing a hot melt adhesive, and thus the present invention has been completed.

Namely, in an aspect, the present invention provides a hot melt adhesive comprising:
(A) a copolymer of ethylene/olefin having 3-20 carbons, and
(B) a copolymer of ethylene/carboxylic acid ester, wherein the copolymer of ethylene/carboxylic acid ester (B) includes a copolymer of ethylene with a (meth)acrylic acid ester; and the amount of the copolymer of ethylene/carboxylic acid ester (B) is from 13 to 35 parts by weight based on 100 parts by weight in total of the components (A) and (B).

In an embodiment, the present invention provides the hot melt adhesive, wherein the copolymer of ethylene/olefin having 3-20 carbons (A) includes (A1) a copolymer of ethylene with octene, and the copolymer of ethylene/carboxylic acid ester (B) includes (B1) a copolymer of ethylene with methyl methacrylate.

It is preferred that the copolymer of ethylene/carboxylic acid ester (B) further includes (B2) a copolymer of ethylene with ethyl acrylate.

In a preferred embodiment, the present invention provides the hot melt adhesive further including (C) Fischer-Tropsch wax. The Fischer-Tropsch wax preferably has a melting point of 100°C to 120°C.

In a second aspect, the present invention provides, a paper product produced by using the above hot melt adhesive.

### Effects of the Invention

Since the hot melt adhesive according to the present invention comprises (A) a copolymer of ethylene/olefin having 3-20 carbons and (B) a copolymer of ethylene/carboxylic acid ester, wherein the copolymer of ethylene/carboxylic acid ester (B) includes a copolymer of ethylene with a (meth)acrylic acid ester; and the amount of the copolymer of ethylene/carboxylic acid ester (B) is from 3 to 35 parts by weight based on 100 parts by weight in total of the components (A) and (B), the hot melt adhesive is less likely to cause stringing and is excellent in heat resistance and thermal stability, and also has excellent adhesive strength in a wide temperature range.

In the hot melt adhesive according to the present invention, when the copolymer of ethylene/olefin having 3-20 carbons (A) includes (A1) a copolymer of ethylene with octene, and the copolymer of ethylene/carboxylic acid ester (B) includes (B1) a copolymer of ethylene with methyl methacrylate, the hot melt adhesive is much less likely to cause stringing and is excellent in heat resistance and thermal stability, and also has excellent adhesive strength in a wide temperature range.

In the hot melt adhesive according to the present invention, when the copolymer of ethylene/carboxylic acid ester (B) which includes a copolymer of ethylene with a (meth)acrylic acid ester further includes (B2) a copolymer of ethylene with ethyl acrylate, the hot melt adhesive is still much less likely to cause stringing and is still excellent in heat resistance and thermal stability, and also has still excellent adhesive strength in a wide temperature range.

When the hot melt adhesive according to the present invention further includes (C) Fischer-Tropsch wax, the hot melt adhesive is excellent in heat resistance and adhesive strength at high temperature.

When the Fischer-Tropsch wax has a melting point of 100°C to 120°C, the hot melt adhesive is more excellent in heat resistance, and adhesive strength at high temperature.

Since a paper product according to the present invention is produced by using the above-mentioned hot melt adhesive, a string-shaped falling substance of the hot melt adhesive does not adhere. Since the paper product of the present invention is made using the hot melt adhesive which is excellent in heat resistance, and adhesive strength in a wide temperature range, it can be stored in a freezer, and also can be left to stand at normal temperature for a long period after storage in the freezer. The paper product is particularly effective as cardboards for packing beverages such as beer, for example, corrugated cardboard, carton and the like.

### Mode for Carrying Out the Invention

A hot melt adhesive according to the present invention comprises:
(A) a copolymer of ethylene/olefin having 3-20 carbons and
(B) a copolymer of ethylene/carboxylic acid ester wherein (B) includes a copolymer of ethylene with a (meth)acrylic acid ester, as essential components.

As used herein, the "hot melt adhesive" means an adhesive which is solid at normal temperature and has fluidity by being heated and melted and, for example, an adhesive which can be applied to a target such as a base material or an adherend, and also can be cured and bonded by being cooled.

In the present invention, the "(A) copolymer of ethylene/olefin having 3-20 carbons" means a copolymer of ethylene with olefin having 3-20 carbons.

Specific examples of the "olefin having 3-20 carbons" include propylene, 1-butene, 1-pentene, 1-hexene, 1-heptene, 1-octene, 1-nonene, 1-decene, cis-2-butene, trans-2-butene, isobutylene, cis-2-pentene, trans-2-pentene, 3-methyl-1-butene, 2-methyl-2-butene, 2,3-dimethyl-2-butene and the like. An olefin having 3-10 carbons is preferable, propylene, butene and octene are more preferable, and octene is particularly preferable.

Examples of the copolymer of ethylene/olefin having 3-20 carbons (A) include (A1) a copolymer of ethylene with octene, (A2) a copolymer of ethylene with propylene and 1-butene, (A3) a copolymer of ethylene with propylene, (A4) a copolymer of ethylene with butene and the like.

In the present invention, it is particularly preferable that the copolymer of ethylene/olefin having 3-20 carbons (A) preferably include (A1) the copolymer of ethylene with octene. It is possible to use commercially available products as the copolymer of ethylene/olefin having 3-20 carbons (A).

Examples of the copolymer of ethylene with octene (A1) include AFFINITY GA1900 (trade name), AFFINITY GA1950 (trade name), AFFINITY EG8185 (trade name), AFFINITY EG8200 (trade name), ENGAGE 8137 (trade name), ENGAGE 8180 (trade name), ENGAGE 8400 (trade name) and the like, manufactured by The Dow Chemical Company.

Examples of the copolymer of ethylene with propylene and 1-butene (A2) include VESTOPLAST 730 (trade name), VESTOPLAST 708 (trade name) and the like, manufactured by EVONIK DEGUSSA.

Examples of the copolymer of ethylene with propylene (A3) include Eastoflex E1016PL-1 and the like, manufactured by Eastman Chemical Company.

Examples of the copolymer of ethylene with butene (A4) include TAFMER A4085 and the like, manufactured by Mitsui Chemicals Inc..

These copolymers of ethylene with olefin having 3-20 carbons can be used alone or in combination.

In the present invention, the "(B) copolymer of ethylene/carboxylic acid ester" means a copolymer of ethylene with a carboxylic acid ester having an ethylenic double bond, which includes a copolymer of ethylene with a (meth)acrylic acid ester.

Examples of (meth)acrylic acid esters include methyl (meth)acrylate, ethyl (meth)acrylate, butyl (meth)acrylate, and 2-ethylhexyl (meth)acrylate.

In the present specification, the (meth)acrylic acid ester means both acrylic acid esters and methacrylic acid ester.

In the present invention, the carboxylic acid ester having an ethylenic double bond is preferably methyl (meth)acrylate or ethyl (meth)acrylate, and particularly preferably methyl methacrylate or ethyl acrylate.

Examples of the "copolymer of ethylene/carboxylic acid ester (B)" include a copolymer of ethylene with a (meth)acrylic acid ester.

In the present invention, the "(B) copolymer of ethylene/carboxylic acid ester" is preferably a copolymer of ethylene with a (meth)acrylic acid ester.

Examples of the copolymer of ethylene with a (meth)acrylic acid ester include a copolymer of ethylene with methyl methacrylate, a copolymer of ethylene with ethyl acrylate, a copolymer of ethylene with butyl acrylate, a copolymer of ethylene with butyl methacrylate and the like.

Examples of the copolymer of ethylene with vinyl carboxylate include a copolymer of ethylene with vinyl acetate.

In the present invention, it is particularly preferred that the copolymer of ethylene with a (meth)acrylic acid ester includes a copolymer of ethylene with methyl methacrylate (B1), and also includes a copolymer of ethylene with ethyl acrylate (B2).

The hot melt adhesive according to the present invention may include, in addition to the copolymer of ethylene/olefin having 3-20 carbons (A) and the copolymer of ethylene/carboxylic acid ester (B) including a copolymer of ethylene with a (meth) acrylic acid ester, other ethylene-based polymers. Examples of other ethylene-based polymers include a copolymer of ethylene/carboxylic acid, a copolymer of ethylene/carboxylic anhydride and the like.

In the present invention, the "copolymer of ethylene/carboxylic acid" means a copolymer of ethylene with carboxylic acid having an ethylenic double bond.

There is no particular limitation on the "carboxylic acid having an ethylenic double bond", as long as it may be a compound having an ethylenic double bond and a carboxyl group, and the hot melt adhesive of the present invention can be obtained. Specific examples thereof include oleic acid, linoleic acid, maleic acid, itaconic acid, succinic acid, acrylic acid, methacrylic acid and the like.

Specific examples of the ethylene/carboxylic acid copolymer include a copolymer of ethylene with acrylic acid, and a copolymer of ethylene with methacrylic acid.

The "ethylene/carboxylic anhydride copolymer" means a copolymer of ethylene with carboxylic anhydride having an ethylenic double bond.

The "carboxylic anhydride having an ethylenic double bond" is a compound having a carboxylic anhydride group in which two carboxyl groups undergo dehydration condensation, and there is no particular limitation as long as the hot melt adhesive of the present invention can be obtained. Specific examples thereof include maleic anhydride and the like.

Specific examples of the ethylene/carboxylic anhydride copolymer include a copolymer of ethylene with maleic anhydride.

In the following the term "copolymer of ethylene/carboxylic acid ester (B) including a copolymer of ethylene with a (meth) acrylic acid ester" is referred to as "copolymer of ethylene/carboxylic acid ester (B)" as well. In the present invention, the copolymer of ethylene/carboxylic acid ester (B) is contained in the amount of 13 to 35 parts by weight based on 100 parts by weight in total of the components (A) and (B).

The copolymer of ethylene/carboxylic acid ester (B) is preferably contained in the amount of 15 to 30 parts by weight, and particularly preferably 15 to 20 parts by weight.

When the copolymer of ethylene/carboxylic acid ester (B) is contained in the amount of 13 to 35 parts by weight, stringing of the hot melt adhesive is reduced, and heat resistance, thermal stability, and adhesive strength in a wide temperature range are maintained.

It is preferred that the hot melt adhesive of the present invention further includes Fischer-Tropsch wax (C). The Fischer-Tropsch wax (C) means a wax which is synthesized by Fischer-Tropsch method and is generally called Fischer-Tropsch wax. The Fischer-Tropsch wax is obtained by fractionating a wax in which component molecules have comparatively wide carbon number distribution so that the component molecules have comparatively narrow carbon number distribution. Typical examples of the Fischer-Tropsch wax include Sasol H1 (trade name), Sasol H8 (trade name) and Sasol C80 (trade name), and any of them is commercially available from Sasol Wax Corporation.

The hot melt adhesive of the present invention is excellent in heat resistance and thermal stability, and also adhesive strength in a high temperature range by including the Fischer-Tropsch wax (C). The Fischer-Tropsch wax (C) preferably has a melting point of 100 to 120°C. The melting point of the Fischer-Tropsch wax means a value measured using differential scanning calorimetry (DSC). Specifically, after weighing 10 mg of a sample in an aluminum container using DSC6220 (trade name) manufactured by SII NanoTechnology Inc., the measurement is performed at a temperature raising rate of 10°C/minute and then the temperature of top of the obtained melting peak is called as a melting point.

The hot melt adhesive according to the present invention may further contain various additives, optionally. Examples of the various additives include a tackifying resin, a plasticizer, a stabilizer (an ultraviolet absorber, an antioxidant), and a fine particle filler.

There is no particular limitation on "tackifying resin", as long as the tackifying resin is usually used in a hot melt adhesive and the objective hot melt adhesive according to the present invention can be obtained.

Examples of such a tackifying resin include, a natural rosin, a modified rosin, a hydrogenated rosin, a glycerol ester of a natural rosin, a glycerol ester of a modified rosin, a pentaerythritol ester of a natural rosin, a pentaerythritol ester of a modified rosin, a pentaerythritol ester of a hydrogenated rosin, a copolymer of a natural terpene, a terpolymer of a natural terpene, a hydrogenated derivative of a copolymer of a hydrogenated terpene, a polyterpene resin, a hydrogenated derivative of a phenol-based modified terpene resin, an aliphatic petroleum hydrocarbon resin, a hydrogenated derivative of an aliphatic petroleum hydrocarbon resin, an aromatic petroleum hydrocarbon resin, a hydrogenated derivative of an aromatic petroleum hydrocarbon resin, a cyclic aliphatic petroleum hydrocarbon resin, and a hydrogenated derivative of a cyclic aliphatic petroleum hydrocarbon resin. These tackifying resins can be used alone or in combination. A liquid type tackifying resin can be used as long as the tackifying resin has a colorless to pale yellow color tone and is substantially free from odor, and also has satisfactory thermal stability. Taking these characteristics into consideration comprehensively, hydrogenated derivatives of the above-mentioned resins are preferable as the tackifying resin.

Commercially available products can be used as the tackifying resin. Examples of the commercially available products include ECR5600 (trade name) manufactured by Exxon Mobil Corporation, MARUKACLEAR H (trade name) manufactured by Maruzen Petrochemical CO, LTD., CLEARON K100 (trade name) manufactured by YASUHARA CHEMICAL CO., LTD., Alkon M100 (trade name) manufactured by Arakawa Chemical Industries, Ltd., I-MARV S100 (trade name), I-MARV Y135 (trade name) and I-MARV P125 (trade name) manufactured by Idemitsu Petroleum Chemical Co., Ltd., CLEARON K4090 (trade name) and CLEARON K4100 manufactured by YASUHARA CHEMICAL CO., LTD., ECR231C (trade name) and ECR179EX (trade name) manufactured by Exxon Mobil Corporation, and Rigarite R7100 (trade name) manufactured by Eastman Chemical Company. These commercially available tackifying resins can be used alone or in combination.

There is no particular limitation on "plasticizer", as long as the plasticizer is mixed for the purpose of decreasing a melt viscosity of a hot melt adhesive, imparting flexibility and improving wetting to an adherend and is compatible with an ethylene-based copolymer, and also the objective hot melt adhesive according to the present invention can be obtained. Examples of the plasticizer include paraffin-based oil, naphthene-based oil and aromatic oil. Colorless and odorless paraffin-based oil is particularly preferable.

Commercially available products can be used as the plasticizer. Examples thereof include White Oil Broom 350 (trade name) manufactured by Kukdong Oil & Chemical Co., Ltd., Diana Frecia S32 (trade name), Diana Process Oil PW-90 (trade name) and DN Oil KP-68 (trade name) manufactured by Idemitsu Kosan Co., Ltd., Enerper M1930 (trade name) manufactured by BP Chemicals Ltd., Kaydol (trade name) manufactured by Crompton Corporation, and Primol352 (trade name) manufactured by Esso Corporation. These plasticizers can be used alone or in combination.

The "stabilizer" is mixed so as to improve stability of the hot melt adhesive by preventing decrease in molecular weight due to heat, air and light, as well as occurrence of gelation, coloration and odor of the hot melt adhesive. There is no particular limitation on the stabilizer, as long as the objective hot melt adhesive according to the present invention can be obtained. Examples of the stabilizer include an antioxidant and an ultraviolet absorber.

The "ultraviolet absorber" is used so as to improve light resistance of the hot melt adhesive. The "antioxidant" is used so as to improve oxidative degradation of the hot melt adhesive. There is no particular limitation on the antioxidant and ultraviolet absorber, as long as the antioxidant and ultraviolet absorber are generally used in hot melt adhesives, and below-mentioned objective paper product can be obtained.

Examples of the "antioxidant" include a phenol-based antioxidant, a sulfur-based antioxidant and a phosphorusbased antioxidant. Examples of the ultraviolet absorber include a benzotriazole-based ultraviolet absorber and a benzophenone-based ultraviolet absorber. A lactone-based stabilizer can also be added. These antioxidants and ultraviolet absorbers can be used alone or in combination.

It is possible to use, as the stabilizer, commercially available products. Examples thereof include SUMILIZER GM (trade name), SUMILIZER TPD (trade name) and SUMILIZER TPS (trade name) manufactured by Sumitomo Chemical Company, Limited, IRGANOX 1010 (trade name), IRGANOX HP2225FF (trade name), IRGAFOS 168 (trade name) and IRGANOX 1520 (trade name) manufactured by Ciba Specialty Chemicals Co., Ltd., ADK STAB AO-60 (trade name) manufactured by ADEKA Corporation, and JF77 (trade name) and JP-650 (trade name)manufactured by Johoku Chemical Co., Ltd. These stabilizers can be used alone or in combination.

The hot melt adhesive according to the present invention can further contain fine particle filler. There is no particular limitation on the fine particle filler, as long as the fine particle filler is generally used and the objective hot melt adhesive according to the present invention can be obtained. Examples of the "fine particle filler" include mica, calcium carbonate, kaolin, talc, titanium oxide, diatomaceous earth, urea-based resin, styrene beads, baked clay, starch and the like. The shape of these fine particle fillers is preferably spherical. There is no particular limitation on the size (diameter in case of a spherical).

The hot melt adhesive according to the present invention can be produced by mixing the copolymer of ethylene/olefin having 3-20 carbons (A), the copolymer of ethylene/carboxylic acid ester (B), the Fischer-Tropsch wax (C) and, optionally, the above-mentioned various additives using a generally known method for producing a hot melt adhesive. For example, it can be produced by mixing the above-mentioned components in a predetermined amount, and heating and melting the mixture. There is no particular limitation on the order of adding each component, heating method and the like, as long as the objective hot melt adhesive can be obtained.

There is no particular limitation on a method of coating the hot melt adhesive, as long as an objective paper product can be obtained, and a hot melt applicator is widely used. Examples of the hot melt applicator include ProBlue P4 Melter (trade name), ProBlue P10 Melter (trade name) and the like, manufactured by Nordson Corp..

The coating method is, for example, roughly classified into contact coating and non-contact coating. The "contact coating" means a coating method in which a dispenser is brought into contact with a member or a film in case of coating a hot melt adhesive, whereas, the "non-contact coating" means a coating method in which a dispenser is not brought into contact with a member or a film in case of coating a hot melt adhesive. Examples of the contact coating method include a slot coater coating and a roll coater coating. Examples of the non-contact coating method include a spiral coating method capable of spiral coating; omega coating and control seam coating methods capable of wavy coating; slot spray coating and curtain spray coating methods capable of planar coating; a dot coating method capable of spot-like coating; a bead coating method capable of linear coating; and the like.

When the hot melt adhesive of the present invention is coated by the hot melt applicator (even if the hot melt adhesive is coated by discharging in the direction horizontal to the ground using the hot melt applicator), a string-shaped substance of the hot melt adhesive is scarcely discharged. Therefore, the adherend and applicator are not stained with the string-shaped substance.

The hot melt adhesive according to the present invention is widely used, for example, in electronic components, woodworking, building materials, sanitary materials, paper product and the like, and can be suitably used so as to produce a paper product and it is useful as a hot melt adhesive for paper product.

The paper product according to the present invention means a paper product produced by using the above-mentioned hot melt adhesive. There is no particular limitation on the kind of the paper product, as long as the paper product is produced by using the above-mentioned hot melt adhesive. Specific examples thereof include bookbinding, calendar, corrugated cardboard, carton and the like. Taking characteristics of the hot melt adhesive of the present invention into consideration, cardboards such as corrugated cardboard and carton are particularly effective as the paper product according to the present invention.

Main embodiments of the present invention are shown below.
1. A hot melt adhesive comprising (A) a copolymer of ethylene/olefin having 3-20 carbons and (B) a copolymer of ethylene/carboxylic acid ester, wherein the copolymer of ethylene/carboxylic acid ester (B) includes a copolymer of ethylene with a (meth)acrylic acid ester; and
   the amount of the copolymer of ethylene/carboxylic acid ester (B) is from 13 to 35 parts by weight based on 100 parts by weight in total of the components (A) and (B).
2. The hot melt adhesive according to the above 1, wherein the copolymer of ethylene/olefin having 3-20 carbons (A) includes (A1) a copolymer of ethylene with octene, and the copolymer of ethylene/carboxylic acid ester (B) includes (B1) a copolymer of ethylene with methyl methacrylate.
3. The hot melt adhesive according to the above 2, wherein the copolymer of ethylene/carboxylic acid ester (B) further includes (B2) a copolymer of ethylene with ethyl acrylate.
4. The hot melt adhesive according to any one of the above 1 to 3, the hot melt adhesive further includes (C) Fischer-Tropsch wax.
5. The hot melt adhesive according to the above 4, wherein (C) the Fisher-Tropsch wax has a melting point of 100°C to 120°C.
6. A paper product produced by using the hot melt adhesive according to any one of the above 1 to 5.

### Examples

The present invention will be described by way of Examples and Comparative Examples for the purpose of describing in a more detailed and more specific manner. These Examples are for illustrative purpose only and it is not to be construed restrictively.

Raw materials, formulations and evaluation methods of hot melt adhesives will be described below.

### (A) Copolymer of ethylene/olefin having 3-20 carbons

(A1) Copolymer of ethylene/octene (1-octene content: 35 to 37% by weight, melt flow rate: 500 g/10 minutes, manufactured by The Dow Chemical Company under the trade name of AFFINITY GA1950)
(A2) Copolymer of propylene/ethylene/1-butene (glass transition point: -28°C, softening point: 124°C, melt viscosity at 190°C: 2,700 mPa·s, manufactured by EVONIK DEGUSSA under the trade name of VESTPLAST703)

### (B) Copolymer of ethylene/carboxylic acid ester

(B1) Polymer of ethylene/methyl methacrylate (methyl methacrylate content: 32% by weight, melt flow rate: 450 g/10 minutes, manufactured by Sumitomo Chemical Company, Limited under the trade name of ACRYFT CM5022)
(B2) Copolymer of ethylene/ethyl acrylate (ethyl acrylate content: 25% by weight, melt flow rate: 250 g/10 minutes, manufactured by The Dow Chemical Company under the trade name of NUC-6070)
(B3) Copolymer of ethylene/vinyl acetate (vinyl acetate content: 28% by weight, melt flow rate: 18 g/10 minutes, manufactured by TOSOH CORPORATION under the trade name of Ultrasen 710)

### (C) Fischer-Tropsch wax

(C1) Fischer-Tropsch wax (melting point: 108°C, penetration degree: 2, manufactured by Sasol Corp. under the trade name of Sasol wax H1

The melting point was measured by the method described in detailed description of the invention.

### (D) Tackifying Resin

(D1) Hydrogenated derivative of aromatic petroleum hydrocarbon resin (softening point: 125°C, manufactured by Idemitsu Kosan Co., Ltd. under the trade name of I-MARV P125)

### (E) Stabilizer

(E1) tetrakis(methylene-3-(3'-di-tert-butyl-4-hydroxyphenyl)propionate)methane (melting point: 110 to 130°C, manufactured by ADEKA Corporation under the trade name of ADK STAB AO-60)
(E2) tris(2,4-di-tert-butylphenyl)phosphite (melting point: 180°C, manufactured by Johoku Chemical Co., Ltd. under the trade name of JP-650)

These components are melted and mixed in the proportions (parts by weight) shown in Tables 1 and 2. Using a universal stirrer, the respective components were melted and mixed at about 145°C over about 1 hour to produce hot melt adhesives of Examples 1 to 5, and Comparative Examples 1 to 5. With respect to the hot melt adhesives of Examples and Comparative Example, heat resistance, adhesion, thermal stability and stringing property were evaluated using the following methods.

In case of heat resistance and adhesion, the hot melt adhesive was applied to a Kraft liner corrugated cardboard to obtain samples. In case of thermal stability, the hot melt adhesive was stored under an atmosphere at 180°C for 1 week and then a rate of change in viscosity and generation of carbide were confirmed. In case of stringing property, a discharge state of the hot melt adhesive was confirmed under an atmosphere at 180°C. Summary of each evaluation is described below.

### <Heat Resistance>

### (Preparation of Samples)

Using a hot melt adhesive melted at 180°C, a Kraft liner corrugated cardboard was laminated to a Kraft liner corrugated cardboard under the conditions of a coating amount of 2 g/m, a setting time of 10 seconds, an opening time of 3 seconds, and a pressing pressure of 1 kg/25 cm².

### (Evaluation Method)

A load (300 g/25 cm²) was applied to each prepared sample in a stress direction under an atmosphere at 60°C, and then the time until the laminated sample was peeled was measured.
A: Peeling time is more than 8 hours.
B: Peeling time is from 5 hours to 8 hours.
C: Peeling time is 2 hours or more and less than 5 hours.
D: Peeling time is less than 2 hours.

### <Adhesion>

### (Preparation of Samples)

Using a hot melt adhesive melted at 180°C, a Kraft liner corrugated cardboard was laminated to a Kraft liner corrugated cardboard under the conditions of a coating amount of 2 g/m, a setting time of 10 seconds, an opening time of 3 seconds, and a pressing pressure of 1 kg/25 cm².

### (Evaluation Method)

Each prepared sample was aged in a constant temperature bath set to 60°C, 23°C or -10°C for 24 hours, and then forcibly peeled by hands under the atmosphere. The proportion of fractured portion(s) of the Kraft liner corrugated cardboard in the total bonding area was regarded as a material fracture ratio (proportion of a fractured portion(s) of material) and then the state thereof was evaluated.
A: A material fracture ratio is more than 80%.
B: A material fracture ratio is from 60% to 80%.
C: A material fracture ratio is 40% or more and less than 60%.
D: A material fracture ratio is less than 40%.

### <Thermal Stability>

### (Preparation of Samples)

A hot melt adhesive (20 g) was charged in a 70 cc glass bottle and stored in a constant temperature bath at 180°C for 1 week, and then (1) viscosity variation ratio and (2) generation of carbide were confirmed.

### (Evaluation Method)

### 1) Viscosity Variation Ratio

A viscosity variation ratio is a ratio of variation of viscosity of the hot melt adhesive after storage at 180°C for 1 week to an initial viscosity at 180°C of the hot melt adhesive.

Specifically, the viscosity variation ratio was determined by the following calculation equation. Viscosity variation ratio (%) = (melt viscosity after storage at 180°C for 1 week) X 100/initial viscosity at 180°C) - 100
A: A viscosity variation ratio is less than 5%.
B: A viscosity variation ratio is from 5% to 10%.
C: A viscosity variation ratio is more than 10% and less than 20%.
D: viscosity variation ratio is 20% or more.

### 2) Generation of Carbide

A: No carbide is generated.
B: Carbide is slightly generated.
C: Carbide is generated.
D: Carbide is remarkably generated.

### <Stringing Property>

A hot melt adhesive was intermittently applied perpendicularly to an adherend which is 20 cm apart from tip of a hot melt gun. A state of a falling substance between the hot melt gun and the adherend was visually observed, and then stringing property was evaluated.

### (Measurement Conditions)

Setting of temperature: all 180°C for a tank, a hose, and a nozzle
Nozzle diameter: 14/1000 inch
Nozzle: 1 orifice (number of discharge ports: 1), 4 orifices (number of discharge port: 4)
Discharge pressure: 0.4 MPa
Number of discharge shots: 350 shots/5 minutes for 1 orifice, 70 shots/1 minute for 4 orifices
   A: Falling substances have a granular shape.
   B: Most falling substances have a granular shape, and some falling substances having a string shape slightly coexists.
   C: Falling substances having a granular shape and falling substances having a string shape coexist.
   D: Falling substances have a string shape.

**Table 1**

| | Examples | | | | |
|---|---|---|---|---|---|
| | 1 | 2 | 3 | 4 | 5 |
| (A1) | 84 | 82 | 84 | 84 | 74 |
| (A2) | | | | | |
| (B1) | 13 | 13 | 13 | 16 | 26 |
| (B2) | 3 | 5 | | | |
| (B3) | | | 3 | | |
| Total of (A) to (B) | 100 | 100 | 100 | 100 | 100 |
| (C1) | 53 | 53 | 53 | 53 | 53 |
| (D1 | 111 | 111 | 111 | 111 | 111 |
| (E1) | 0.8 | 0.8 | 0.8 | 0.8 | 0.8 |
| (E2) | 0.8 | 0.8 | 0.8 | 0.8 | 0.8 |
| Total weight of (A) to (E) | 264.7 | 264.7 | 264.7 | 264.7 | 264.7 |
| Heat resistance | A | A | A | A | B |
| Adhesion | | | | | |
| 60°C | A | A | A | A | B |
| 23°C | A | A | A | A | A |
| -10°C | A | A | A | A | A |
| Thermal stability | | | | | |
| Viscosity variation ratio | A | A | A | A | B |
| Generation of carbide | A | A | A | A | C |
| Stringing property | | | | | |
| 1 orifice/180°C/350 shots | A | A | A | B | B |
| 4 orifices/180°C/70 shots | A | A | A | A | B |

**Table 2**

| | Comparative Examples | | | | |
|---|---|---|---|---|---|
| | 1 | 2 | 3 | 4 | 5 |
| (A1) | 95 | 89 | 100 | 61 | 84 |
| (A2) | | | | | 16 |
| (B1) | 5 | 11 | | 39 | |
| (B2) | | | | | |
| (B3) | | | | | |
| Total of (A) to (B) | 100 | 100 | 100 | 100 | 100 |
| (C1) | 53 | 53 | 53 | 53 | 53 |
| (D1) | 111 | 111 | 111 | 111 | 111 |
| (E1) | 0.8 | 0.8 | 0.8 | 0.8 | 0.8 |
| (E2) | 0.8 | 0.8 | 0.8 | 0.8 | 0.8 |
| Total weight of (A) to (E) | 264.7 | 264.7 | 264.7 | 264.7 | 264.7 |
| Heat resistance | D | D | D | C | D |
| Adhesion | | | | | |
| 60°C | B | B | C | C | D |
| 23°C | A | A | A | A | A |
| -10°C | A | A | A | A | A |
| Thermal stability | | | | | |
| Viscosity variation ratio | A | A | A | D | C |
| Generation of carbide | A | A | A | D | B |
| Stringing property | | | | | |
| 1 orifice/180°C/350 shots | A | A | D | B | D |
| 4 orifices/180°C/70 shots | D | C | D | B | D |

As shown in Table 1, the hot melt adhesives of Examples 1 to 5 comprise a copolymer of ethylene/olefin having 3-20 carbons (A) and a copolymer of ethylene/carboxylic acid ester (B) in a specific ratio, and are therefore excellent in all of heat resistance, adhesion, thermal stability and stringing property, and are also excellent in balance between the performances. The hot melt adhesives of Examples 1 to 3 exhibit extremely excellent performances, namely, rating "A" in all of heat resistance, adhesion, thermal stability and stringing property since the component (B) includes (B2) or (B3) in addition to (B1). The hot melt adhesives of Examples are useful in the paper processing field, particularly application to cardboards such as corrugated cardboard and carton.

To the contrary, the hot melt adhesives of Comparative Examples 1 to 5 are inferior in at least one performance of heat resistance, adhesion, thermal stability and stringing property, as shown in Table 2.

The hot melt adhesives of Comparative Examples 1 to 3 and Comparative Example 5 show low proportion of the component (B) as compared with the hot melt adhesives of Examples. It was confirmed from Table 2 that, when the proportion of the component (B) is low, heat resistance of the hot melt adhesive remarkably deteriorates.

The hot melt adhesive of Comparative Example 4 show high proportion of the component (B) as compared with the hot melt adhesives of Examples. It was confirmed from Table 2 that, when the proportion of the component (B) increases, thermal stability of the hot melt adhesive remarkably deteriorates.

### Industrial Applicability

The present invention provides a hot melt adhesive. The hot melt adhesive according to the present invention is suited in paper processing field, particularly production of cardboards such as corrugated cardboard.

## Claims

1. (Amended)
A hot melt adhesive comprising:
(A) a copolymer of ethylene/olefin having 3-20 carbons and
(B) a copolymer of ethylene/carboxylic acid ester, wherein
the copolymer of ethylene/carboxylic acid ester (B) includes a copolymer of ethylene with a (meth)acrylic acid ester; and
the amount of the copolymer of ethylene/carboxylic acid ester (B) is from 13 to 35 parts by weight based on 100 parts by weight in total of the components (A) and (B).

2. The hot melt adhesive according to claim 1, wherein
the copolymer of ethylene/olefin having 3-20 carbons (A) includes (A1) a copolymer of ethylene with octene, and
the copolymer of ethylene/carboxylic acid ester (B) includes (B1) a copolymer of ethylene with methyl methacrylate.

3. The hot melt adhesive according to claim 2, wherein
the copolymer of ethylene/carboxylic acid ester (B) further includes (B2) a copolymer of ethylene with ethyl acrylate.

4. The hot melt adhesive according to any one of claims 1-3, wherein the hot melt adhesive further includes (C) Fischer-Tropsch wax.

5. A paper product produced by using the hot melt adhesive according to any one of claims 1 to 4.

## Patentansprüche

1. (Geändert)
Schmelzklebstoff, umfassend:
(A) ein Copolymer aus Ethylen/Olefin mit 3-20 Kohlenstoffatomen und
(B) ein Copolymer aus Ethylen/Carbonsäureester, wobei
das Copolymer aus Ethylen/Carbonsäureester (B) ein Copolymer aus Ethylen mit einem (Meth)acrylsäureester enthält; und
die Menge des Copolymers aus Ethylen/Carbonsäureester (B) von 13 bis 35 Gewichtsteile bezogen auf insgesamt 100 Gewichtsteile der Komponenten (A) und (B) beträgt.

2. Schmelzklebstoff nach Anspruch 1, wobei
das Copolymer aus Ethylen/Olefin mit 3-20 Kohlenstoffatomen (A) (A1) ein Copolymer aus Ethylen mit Octen enthält und
das Copolymer aus Ethylen/Carbonsäureester (B) (B1) ein Copolymer aus Ethylen mit Methylmethacrylat enthält.

3. Schmelzklebstoff nach Anspruch 2, wobei
das Copolymer aus Ethylen/Carbonsäureester (B) ferner (B2) ein Copolymer aus Ethylen mit Ethylacrylat enthält.

4. Schmelzklebstoff nach einem der Ansprüche 1-3, wobei der Schmelzklebstoff ferner (C) Fischer-Tropsch-Wachs enthält.

5. Papierprodukt, das unter Verwendung des Schmelzklebstoffs nach einem der Ansprüche 1 bis 4 hergestellt ist.

## Revendications

1. (Modifiée)
Adhésif thermofusible comprenant :
(A) un copolymère d'éthylène/d'oléfine ayant 3 à 20 carbones et
(B) un copolymère d'éthylène/d'ester d'acide carboxylique, dans lequel
le copolymère d'éthylène/d'ester d'acide carboxylique (B) comprend un copolymère d'éthylène avec un ester d'acide (méth)acrylique ; et
la quantité du copolymère d'éthylène/d'ester d'acide carboxylique (B) est de 13 à 35 parts en poids sur la base de 100 parts en poids du total des composants (A) et (B).

2. Adhésif thermofusible selon la revendication 1, dans lequel
le copolymère d'éthylène/d'oléfine ayant 3 à 20 carbones (A) comprend (A1) un copolymère d'éthylène et d'octène, et
le copolymère d'éthylène/d'ester d'acide carboxylique (B) comprend (B1) un copolymère d'éthylène et de méthacrylate de méthyle.

3. Adhésif thermofusible selon la revendication 2, dans lequel
le copolymère d'éthylène/d'ester d'acide carboxylique (B) comprend en outre (B2) un copolymère d'éthylène et d'acrylate d'éthyle.

4. Adhésif thermofusible selon l'une quelconque des revendications 1 à 3, dans lequel l'adhésif thermofusible comprend en outre (C) de la cire de Fischer-Tropsch.

5. Produit de papier obtenu en utilisant l'adhésif thermofusible selon l'une quelconque des revendications 1 à 4.
